# EUROPÄISCHE PATENTSCHRIFT

(11) **EP 2 607 272 B1**
(45) Veröffentlichungstag und Bekanntmachung des Hinweises auf die Patenterteilung: **21.02.2018**
(21) Anmeldenummer: 12194105.8
(22) Anmeldetag: 23.11.2012
(51) Int. Cl.: B65G 19/24

(54) **Mitnehmer für Gliederketten aus wenigstens zwei Teilkörpern sowie Verfahren zu seiner Herstellung**
Connecting device to link chains comprising at least two bodies and method for its manufacture
Element de fixation à chaînes à maillons composé d'au moins deux corps partiels et procédé de fabrication

(30) Priorität: 21.12.2011 DE 102011056783
(43) Veröffentlichungstag der Anmeldung: 26.06.2013
(73) Patentinhaber: RUD Ketten Rieger & Dietz GmbH u. Co. KG, 73432 Aalen (DE)
(72) Erfinder: Wesch, Rupert, 73457 Essingen (DE); Lang, Werner, 73463 Westhausen-Lippach (DE); Nuding, Andreas, 73312 Geislingen an der Steige (DE)
(74) Vertreter: Grünecker Patent- und Rechtsanwälte PartG mbB

(56) Entgegenhaltungen:
- CH-A- 468 918
- DE-A1- 2 413 661
- DE-A1- 3 622 385
- DE-C2- 2 925 045

## Beschreibung

Die Erfindung betrifft einen Mitnehmer zur Anbringung eines zu fördernden Gegenstandes an einer Gliederkette mit wenigstens einem, mit der Gliederkette in Eingriff bringbar ausgestalteten Mitnehmervorsprung, der von einem Befestigungssockel zur Befestigung des Gegenstandes am Mitnehmer absteht, wobei der Befestigungssockel und der wenigstens eine Mitnehmervorsprung von jeweils wenigstens einem Teilkörper gebildet und die Teilkörper nicht mehr zerstörungsfrei voneinander lösbar zusammengefügt sind.

Mitnehmer dieses Typs sind beispielsweise aus der DE 29 25 045 C2, der DE 29 25 046 C2, der DE 38 08 827 C2, der DE 39 07 545 C2, der DE 10 2007 022 278 A1 und der EP 2 147 875 A2 bekannt. Die Mitnehmer werden in Antriebs- und Fördervorrichtungen, beispielsweise in Becherwerken oder Kratzern eingesetzt, bei denen die Antriebskraft über die Gliederkette an die zu fördernden Gegenstände verteilt wird. In den aufgeführten Druckschriften wird als Gliederkette stets eine Rundstahlkette verwendet. Der Vorsprung, meist sind pro Mitnehmer zwei Vorsprünge vorgesehen, dient dazu, ein Kettenglied der Gliederkette zu umgreifen oder in ein Kettenglied eingesteckt zu werden. So entsteht zwischen dem Mitnehmer und der Gliederkette eine formschlüssige Verbindung, aufgrund der der Mitnehmer mit der Gliederkette mitbewegt wird. Der zu fördernde Gegenstand, beispielsweise ein Fördertrog oder ein Kratzeisen, wird an der Sockelplatte befestigt. Die Antriebskraft wird also von der Gliederkette über den Mitnehmer an den zu fördernden Gegenstand geleitet.

Im Laufe der Zeit haben sich unterschiedliche Bauformen von Mitnehmern entwickelt. So zeigen die DE 38 08 827 C2 und die DE 39 07 545 C2 Mitnehmer mit den eingangs genannten Merkmalen, bei denen die Mitnehmervorsprünge mit dem Befestigungssockel verschweißt sind.

Die in der DE 29 25 045 C2 dargestellten Mitnehmer weisen Mitnehmervorsprünge auf, die wiederholt lösbar über Verriegelungselemente mit dem Befestigungssockel verbunden sind. Die Verbindung soll dabei einen Drehungsvorsprung gegenüber dem Befestigungssockel ermöglichen, um Bewegung der Kette über Antriebs- und Umlenkräder besser folgen zu können. Im Gegensatz zur Schweißverbindung der DE 38 08 827 C2 und DE 39 07 545 C2, bei denen die Mitnehmervorsprünge nur noch nach Zerstörung des Mitnehmers entfernt werden können, erlaubt die Lösung der DE 29 25 045 C2, die einen Mitnehmer nach dem Oberbegriff des Anspruchs 1 und ein Verfahren zur Herstellung eines Mitnehmers nach dem Oberbegriff des Anspruchs 10 offenbart, einen einfachen Austausch verschlissener Mitnehmervorsprünge. Allerdings hat sich die lösbare Verbindung zwischen Mitnehmervorsprung und Befestigungssockel aufgrund einer höheren Fehleranfälligkeit im Dauerbetrieb nicht bewährt.

Die DE 29 25 046 C2, die DE 10 2007 022 278 A1 und die EP 2 147 875 A2 schließlich befassen sich mit Ausgestaltungen, bei denen die Montage des Mitnehmers an der Gliederkette dadurch vereinfacht werden soll, dass die beiden Mitnehmervorsprünge gegeneinander verschwenkbar sind.

Nachteilig bei den aus dem Stand der Technik bekannten Mitnehmern ist, dass sie, wenn man eine hohe Verschleißfestigkeit erzielen will, recht aufwendig zu fertigen sind.

Aus der DE 36 22 385 A1 ist ein Kratzerförderer bekannt, bei dem quer angeordnete Kratzorgane über beweglich in einem Kratzorgan gelagerte Bolzen mit Antriebsketten verbunden sind. Aus der DE 2 413 661 ist ein Kettenförderer bekannt, bei dem quer verlaufende Förderorgane durch ein Schwenken zweier Vorsprünge in zwei Kettenglieder an Antriebsketten angebracht werden, wobei die Vorsprünge mit einer Basisplatte verschweißt sind. Die CH 468 918 zeigt verschieden ausgestaltete Verbindungsglieder zur Verbindung von Transportelementen mit einer Rundstahlkette. Bei dem in der DE 29 25 045 C2 gezeigten Kettenförderer werden Vorsprünge durch eine Basisplatte in Kettenglieder gesteckt und anschließend rotiert, um ein Kettenglied zu umschließen.

Der Vorteil, einen mit geringem Aufwand zu fertigenden Mitnehmer zu schaffen, der eine hohe Verschleißfestigkeit aufweist, wird für den eingangs genannten Mitnehmer dadurch gelöst, dass der den Befestigungssockel bildende, wenigstens eine Teilkörper aus einem anderen Werkstoff gebildet ist als der den wenigstens einen Mitnehmervorsprung bildende, wenigstens eine andere Teilkörper, wobei der wenigstens eine Teilkörper mit dem wenigstens andern Teilkörper über wenigstens eine Formschlussanordnung verbunden ist.

Dies hat zur Folge, dass die Werkstoffe des Befestigungssockels und des Mitnehmervorsprungs an die jeweilige Belastungssituation angepasst werden können. Beispielsweise ist es von Vorteil, wenn die die Gliederkette berührende, verschleißgefährdete Oberfläche des Mitnehmervorsprungs sehr hart ist. Das Material des Befestigungssockels kann dagegen im Hinblick auf eine möglichst gute Befestigbarkeit des Gegenstandes nicht im Hinblick auf eine hohe Härte, sondern unter dem Aspekt einer guten Schweißeignung ausgewählt sein. Die Formschlussanordnung stellt dabei eine besonders einfache und sichere Verbindung her.

Der Erfindung liegt die Aufgabe zugrunde, eine besonders innige Verbindung zwischen den Teilkörpern zu ermöglichen. Die Aufgabe wird durch den Mitnehmer nach Anspruch 1 gelöst. Die obige Lösung kann durch die folgenden, jeweils für sich vorteilhaften und unabhängig voneinander kombinierbaren Ausgestaltungen weiter verbessert sein. Erfindungsgemäß ist der Mitnehmer in einem Verbundgussverfahren hergestellt: der wenigstens eine Teilkörper ist an wenigstens einen anderen Teilkörper angegossen. Hierzu kann der wenigstens eine Teilkörper vorgefertigt sein. Dieses Verfahren ermöglicht eine besonders innige Verbindung zwischen den Teilkörpern bzw. zwischen Sockel und Mitnehmervorsprung, die sich auch bei sehr unterschiedlichen Materialien erreichen lässt.

Die durch den Verbundguss hergestellte Verbindung ist bevorzugt nicht stoffschlüssig, sondern formschlüssig: In der Regel dürfte der Wärmeeintrag beim Angießen nicht ausreichen, um die Oberfläche des vorgefertigten Teilkörpers anzuschmelzen. Insbesondere bei metallenen Teilkörpern wird die mit der Schmelze eingebrachte Wärme über den vorgefertigten Teilkörperschnell dissipiert. Allerdings kann durch Anschmelzen des vorgefertigten Teilkörpers auch ein Stoffschluss erreicht werden. Hierzu wird ein höherer Wärmeeintrag beim Angießen benötigt. Die Werkstoffe, aus denen die zusammengefügten Teilkörper gefertigt sind, können insbesondere Metallwerkstoffe, bevorzugt Stähle, sein.

Sollen die Mitnehmervorsprünge eine besonders hohe Verschleißfestigkeit erhalten, ist es von Vorteil, wenn der Werkstoff, aus dem der wenigstens eine, den Mitnehmervorsprung bildende Teilkörper gefertigt ist, ein härtbarer oder vergütbarer Stahl, beispielsweise ein Vergütungsstahl, ist. Insbesondere kann die Oberfläche des Mitnehmervorsprungs zumindest teilweise, sinnvollerweise an der im Betrieb mit der Gliederkette in Berührung kommenden Stelle gehärtet, beispielsweise induktiv randgehärtet oder einsatzgehärtet, oder vergütet sein. Zu diesem Zweck ist es von Vorteil, wenn der Vergütungsstahl ein randschichthärtbarer, einsatzhärtbarer und/oder induktiv härtbarer Stahl ist.

Der wenigstens eine den Befestigungssockel bildende Teilkörper kann aus einem schweißgeeigneter Stahl gefertigt sein. Der am Befestigungssockel zu befestigende Gegenstand kann so einfach an den Befestigungssockel angeschweißt werden.

Der Befestigungssockel kann gemäß einer weiteren vorteilhaften Ausgestaltung eine rückwärtige Befestigungsfläche für den zu fördernden Gegenstand bilden. Die Befestigungsfläche kann plan sein, um die Befestigung des Gegenstands zu erleichtern und eine Ausricht- und Anschlagfläche für den Gegenstand zu bieten.

Um eine belastbarere Verbindung zwischen den wenigstens zwei Teilkörpern zu erhalten, können die wenigstens zwei Teilkörper eine Formschlussanordnung mit wenigstens zwei ineinander greifenden Formschlusselementen aufweisen. Das eine Formschlusselement kann dabei von dem wenigstens einen Teilkörper vorgefertigt sein und sich in den anderen Teilkörper hinein erstrecken. Ist wenigstens einer der Teilkörper im Verbundgussverfahren hergestellt und an wenigstens einen anderen Teilkörper angegossen, so kann insbesondere eines der Formschlusselemente dem anderen Formschlusselement der Formschlussanordnung durch das Angießen in Eingriff gelangen. Dies geschieht automatisch dadurch, dass beim Angießen die Schmelze um das vorgefertigte Formschlusselement strömt und erstarrt. Das Formschlusselement des einen insbesondere vorgefertigten Teilkörpers ist folglich mit dem anderen Teilkörper vergossen.

Die beiden ineinander greifenden Formschlusselemente können insbesondere in Form eines Haltevorsprungs und einer Halteaufnahme, in die sich der Haltevorsprung erstreckt, ausgestaltet sein. Wird der Mitnehmer, wie erfindungsgemäß vorgesehen, durch Angießen hergestellt, so kann jedes der ineinander greifenden Formschlusselemente im Zuge des Gießverfahrens an das bereits vorgefertigte andere Formschlusselement angegossen werden.

Beispielsweise kann zunächst der Haltevorsprung vorgefertigt sein, so dass sich beim Angießen des anderen Teilkörpers als komplementäres Formschlusselement automatisch die Aufnahme als Negativform des Haltevorsprungs ergibt. Ist umgekehrt die Halteöffnung das vorgefertigte Formschlusselement, so ergibt sich im Zuge des Verbundgusses der sich in die Halteöffnung erstreckende Haltevorsprung als komplementäres Formschlusselement in der Negativform.

Die Festigkeit der Verbindung zwischen den beiden Teilkörpern kann weiter verstärkt werden, wenn die Formschlusselemente in einer der obigen Ausgestaltungen wiederum selbst mit kleineren komplementären Formschlusselementen versehen sind. Beispielsweise kann die Formschlussanordnung einen Haltevorsprung als Formschlusselement aufweisen, der sich in einen ein komplementäres Formschlusselement bildenden Durchbruch erstreckt. Der Haltevorsprung selbst kann mit einem Haltedurchbruch versehen sein, durch den sich das Material des anderen Teilkörpers erstreckt, so dass die Halteöffnung einen kleineren Haltevorsprung ausbildet, der den zu ihr komplementären Haltevorsprung durchdringt. Folglich kann nach einer Ausgestaltung der eine Teilkörper eine vom Material des wenigstens einen anderen Teilkörpers durchdrungene Öffnung sein.

Die Richtungen, in denen die Formschlusselemente des einen Teilkörpers jeweils den anderen Teilkörper durchsetzen bzw. in der sich die Formschlusselemente erstrecken, verlaufen bevorzugt senkrecht zur Längsrichtung der Gliederkette.

Der Gussprozess vereinfacht sich, wenn das vorgefertigte Formschlusselement, um das das andere Formschlusselement der Formschlussanordnung gegossen wird, ein Haltevorsprung ist. Bei einem Haltevorsprung ist die Gefahr einer vorzeitigen Abkühlung der Schmelze gegenüber einer Aufnahme oder Ausnehmung, in die die Schmelze einströmt, verringert.

Alternativ zur erfindungsgemäßen Lösung kann eine solche Formschlussverbindung auch durch ein Umformverfahren hergestellt werden, in dem das wenigstens eine Formschlusselement zur Herstellung eines Formschlusses plastisch verformt wird. So kann beispielsweise der Haltevorsprung einen Niet bilden, dessen Schaft sich durch den wenigstens einen anderen Teilkörper erstreckt und am Ende gestaucht ist, um den sicheren Formschluss zu erzielen. Es kann auch die Halteöffnung um den Haltevorsprung verformt werden.

Ferner kann anstelle eines nur oder überwiegend zum Formschluss führenden Gießverfahrens auch zumindest abschnittsweise eine stoffschlüssige Verbindung zwischen den Teilkörpern beispielsweise durch Laserstrahl-, Elektronenstrahl-, Reib- oder Stumpfschweißen, oder durch eine entsprechende Temperaturführung beim Verbundgießen erzielt werden. Gegenüber dem Gussverfahren ist beim Schweißen jedoch nachteilig, dass die zu verschweißenden Teilkörper exakt aufeinander gelegt werden müssen. Außerdem müssen die Schweißflächen fein bearbeitet und öl- und fettfrei sein.

Der wenigstens eine den Mitnehmervorsprung bildende Teilkörper kann eine gegenüber dem Mitnehmer verstärkte Basis aufweisen, deren Grundfläche der Grundfläche des Befestigungssockels zugewandt ist. Die Basis nimmt die auf den Mitnehmervorsprung wirkenden Momente auf und erhöht den Lastquerschnitt für den Kraftfluss vom Mitnehmervorsprung hin zum Befestigungssockel.

Die Basis kann insbesondere zumindest teilweise zwei Mitnehmervorsprünge, vorzugsweise an ihren beiden gegenüberliegenden Enden, ausbilden. Dies vereinfacht die Fertigung des Mitnehmers, weil die Mitnehmervorsprünge und die Basis in einem Schritt aus demselben Material gefertigt werden können.

Der Befestigungssockel und die Basis können gemäß einer weiteren Ausgestaltung in etwa dieselbe, vorzugsweise rechteckige, Grundfläche aufweisen bzw. sich über die gesamte Länge des Mitnehmers erstrecken. Die Grundfläche kann insbesondere in Richtung der Gliederkette langgestreckt sein. Der Vorteil bei dieser Ausgestaltung kann darin gesehen werden, dass die gesamte Grundfläche des Befestigungssockels zur Bildung eines Formschlusses mit der Basis verwendet werden kann.

Die Basis kann block- bzw. quaderförmig sein. In die Basis können Formschlusselemente, insbesondere Haltevorsprünge, ragen

Die Basis und der Befestigungssockel können sich parallel zueinander erstrecken. Die Formschlusselemente des Befestigungssockels können in einer bevorzugten Ausgestaltung in die Basis ragen, so dass der Befestigungssockel, der gemäß einer Ausgestaltung letztendlich nur der Befestigung des Gegenstandes am Mitnehmer dient, mit relativ geringer Wandstärke gefertigt sein kann. Dies lässt ausreichend Platz, die Basis mit einer höheren Materialstärke in Richtung der Mitnehmervorsprünge auszugestalten, so dass ein größerer Lastquerschnitt zur Aufnahme der Kräfte aus dem Werkstoff des Mitnehmervorsprunges zur Verfügung steht. Dieser Werkstoff dürfte bei vielen Anwendungen eine höhere Festigkeit aufweisen als der Werkstoff für den Befestigungssockel, da die Mitnehmervorsprünge mechanisch stärker belastet sind als der Befestigungssockel.

Der den Befestigungssockel bildende, wenigstens eine Teilkörper kann insbesondere eine Befestigungsplatte aufweisen. Die Materialstärke der Befestigungsplatte senkrecht zu ihrer Ebene kann kleiner sein als die Materialstärke der Basis in dieser Richtung. An der Befestigungsplatte kann der zu fördernde Gegenstand angebracht, beispielsweise verschweißt werden. An der vom zu fördernden Gegenstand abgewandten Seite der Befestigungsplatte können Formschlusselemente, insbesondere in Form eines Haltevorsprungs, angeordnet sein.

Schließlich kann insbesondere der wenigstens eine den Mitnehmervorsprung bildende Teilkörper an den wenigstens einen anderen, den Befestigungssockel bildenden Teilkörper angegossen sein. Der wenigstens eine den Befestigungssockel bildenden Teilkörper liegt bei dieser Ausgestaltung vor dem Gießen bereits als vorgefertigtes Teil vor und bildet einen Teil der Gussform. Diese Ausgestaltung hat gegenüber einem Umgießen des wenigstens einen Teilkörpers mit dem wenigstens einen Mitnehmervorsprung den Vorteil, dass ein großer Lastquerschnitt für den Mitnehmervorsprung und/oder die Basis verbleibt. Dies ist insbesondere dann der Fall, wenn am Befestigungssockel Formschlusselemente ausgebildet sind, die in den anzugießenden Teilkörper ragen.

Die Erfindung betrifft auch ein Verfahren zur Herstellung eines Mitnehmers nach Anspruch 10. Im Folgenden ist die Erfindung anhand unterschiedlicher Ausführungsformen mit Bezug auf die Zeichnungen beispielhaft erläutert. Selbstverständlich können nach Maßgabe der obigen jeweils für sich vorteilhaften und unabhängig miteinander kombinierbaren Weiterbildungen einzelne Merkmale weggelassen oder hinzugefügt werden, je nach dem, ob es bei einer bestimmten Anwendung auf den mit diesem Merkmal verbundenen Vorteil ankommt, oder nicht. Im Folgenden sind für die verschiedenen Ausführungsbeispiele dieselben Bezugszeichen verwendet, sofern damit Elemente gleicher oder ähnlicher Funktion und/oder gleichen oder ähnlichen Aufbaus bezeichnet sind.

Es zeigen:
- Fig. 1: eine schematische Perspektivdarstellung einer Ausführungsform eines erfindungsgemäßen Mitnehmers entlang einer Mittenebene;
- Fig. 2: eine schematische Darstellung einer weiteren Ausführungsform eines erfindungsgemäßen Mitnehmers mit einem Halbschnitt entlang einer Mittenebene;
- Fig. 3: eine schematische Darstellung einer weiteren Ausführungsform eines erfindungsgemäßen Mitnehmers mit einem Halbschnitt entlang einer Mittenebene;
- Fig. 4: eine schematische Darstellung einer weiteren Ausführungsform eines erfindungsgemäßen Mitnehmers mit einem Halbschnitt entlang einer Mittenebene;
- Fig. 5: eine schematische Darstellung einer Ausführungsform eines nicht beanspruchten Mitnehmers mit einem Halbschnitt entlang einer Mittenebene.

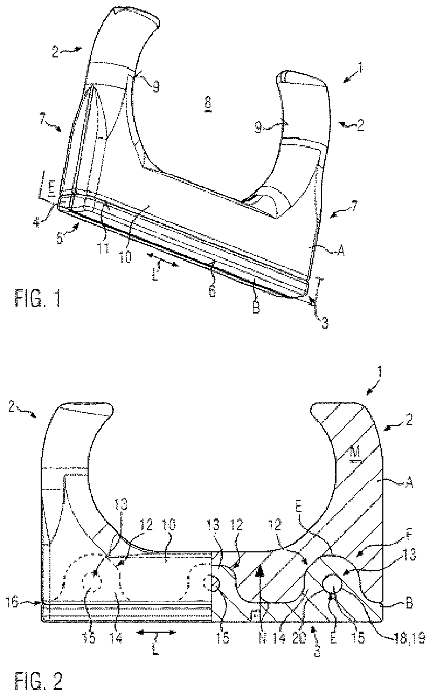

Fig. 1 zeigt eine Ausführungsform eines erfindungsgemäßen Mitnehmers 1, der mit zwei Mitnehmervorsprüngen 2 versehen ist. Die Mitnehmervorsprünge 2 stehen von einem Befestigungssockel 3 ab. Der Befestigungssockel 3 kann, wie Fig. 1 zeigt, eine Befestigungsplatte 4 bilden. An der von den Mitnehmervorsprüngen 2 abgewandten Seite 5 bildet der Befestigungssockel 3 eine bevorzugt plane Befestigungsfläche 6 aus, an der zu fördernde Gegenstände am Mitnehmer befestigt, insbesondere angeschweißt werden können.

Die Befestigungsfläche 6 hat im Wesentlichen die Form eines langgestreckten Rechtecks mit einer Längsrichtung L. Die Mitnehmervorsprünge 2 liegen an den beiden in einer Längsrichtung L des Mitnehmers 1 gelegenen Enden 7. Die Mitnehmervorsprünge 2 springen senkrecht zur Grundfläche 6 hornförmig vor und umschließen in Längsrichtung L einen Aufnahmeraum 8 für beispielsweise ein Kettenglied einer Gliederkette, wie eine Rund- oder Profilstahlkette. Die Gliederkette ist in Fig. 1 der Übersichtlichkeit halber nicht gezeigt.

Die Mitnehmervorsprünge 2, wie sie in Fig. 1 gezeigt sind, werden in zwei aufeinanderfolgende Kettenglieder gleicher Orientierung eingesteckt, so dass zwischen den Mitnehmervorsprüngen 2 im Aufnahmeraum 8 ein Kettenglied unterschiedlicher Orientierung zu liegen kommt. Dies ist beispielsweise in der DE 10 2007 022 278 A1 gezeigt. Die in Richtung der Gliederkette gelegenen Außenflächen dieses Kettengliedes liegen an den sich gegenüberliegenden Innenflächen der Mitnehmervorsprünge 9 an. Die Innenflächen 9 sind einem hohen Verschleiß ausgesetzt. Um diesen zu mindern, ist die Oberfläche des Mitnehmervorsprungs 2 zumindest teilweise, vorzugsweise an den Innenflächen 9, gehärtet, insbesondere induktiv randgehärtet oder einsatzgehärtet.

Die Form der Mitnehmervorsprünge 2 richtet sich nach der Art der Gliederkette und der Art des Eingriffs zwischen Gliederkette und Mitnehmer. So sind anstelle der in Fig. 1 gezeigten hornförmigen Mitnehmervorsprünge auch gabelförmige Mitnehmervorsprünge möglich, die die Kettenglieder außen umgreifen, wie beispielsweise die DE 28 08 827 C2 zeigt. Auch andere Formen von Mitnehmervorsprüngen sowie unterschiedliche Formen von Mitnehmervorsprüngen an einem einzelnen Mitnehmer sind denkbar.

Die Anzahl der Mitnehmervorsprünge 2 des Mitnehmers 1 kann, abhängig vom Anwendungsfall, ebenfalls variieren. So kann pro Mitnehmer 1 auch lediglich ein einziger Vorsprung vorgesehen sein. Soll der Mitnehmer 1 gleichzeitig mit mehreren Gliederketten in Eingriff gelangen, können auch mehr als zwei Mitnehmer vorgesehen sein.

In der Ausgestaltung nach Fig. 1 wird der Mitnehmer in Förder- oder Antriebsvorrichtungen oder zur Anbringung von Gegenständen wie Bechern, Kratzeisen oder Trögen an Gliederketten eingesetzt. Der am Befestigungssockel 3 angeordnete, zu fördernde Gegenstand wird durch die Kette über den Mitnehmer 1 bewegt.

Der Mitnehmer 1 ist in mehrere Teilkörper unterteilt, die so zusammengefügt sind, dass sie zerstörungsfrei nicht mehr voneinander lösbar sind. Bei der Ausführungsform der Fig. 1 sind beispielhaft zwei Teilkörper A und B vorgesehen. Der eine Teilkörper A bildet den wenigstens einen Mitnehmervorsprung 2 aus, der andere Teilkörper B bildet den Befestigungssockel 3. Die Teilkörper A, B können weiter unterteilt sein. Beispielsweise können anstelle eines Teilkörpers A mit zwei Mitnehmervorsprüngen auch zwei Teilkörper vorgesehen sein, von denen jeder einen Mitnehmervorsprung 2 aufweist. Der Teilkörper B kann ebenfalls in mehrere Teilkörper unterteilt sein.

Bei der in Fig. 1 dargestellten Ausführungsform bildet der eine Teilkörper A eine Basis 10 zwischen dem Mitnehmervorsprung 2 und dem Befestigungssockel 3. Wie Fig. 1 zeigt, kann die Basis block- oder quaderförmig sein. Die Basis 10 kann die beiden Mitnehmervorsprünge 2 verbinden. Die Mitnehmervorsprünge 2 sind hierzu beispielsweise an den in Längsrichtung L des Mitnehmers 1 gelegenen Enden 7 der Basis 10 angeordnet. Sie dient dazu, die im Betrieb in die Mitnehmervorsprünge 2 eingeleiteten Kräfte und Momente aufzunehmen und an den Befestigungssockel 3 weiterzuleiten. Die Basis 10 weist eine Grundfläche 11 auf, die dem Befestigungssockel 3 zugewandt ist und die Grundfläche 11 bevorzugt berührt. Der Befestigungssockel 10 und die Basis 3 können dabei denselben Grundriss aufweisen.

Die wenigstens zwei Teilkörper A, B sind aus unterschiedlichen Werkstoffen, insbesondere zwei unterschiedlichen Stahlsorten, gefertigt. Die Werkstoffe sind unabhängig voneinander ausgewählt und an die unterschiedlichen Anforderungen, die an die beiden Teilkörper A, B gestellt werden, optimal anpassbar. So kommt es bei den Mitnehmervorsprüngen 2, wie oben beschrieben, auf eine harte Oberfläche zumindest an den Innenflächen 9 an. So können die Mitnehmervorsprünge 2 wenigstens im Bereich der Innenfläche 9 einsatzgehärtet oder induktiv nachgehärtet sein. Außerdem müssen die im Betrieb auftretenden Kräfte vom relativ kleinen Lastquerschnitt der Mitnehmervorsprünge 2 aufgefangen werden. Dies setzt nicht nur eine gute Härtbarkeit, sondern auch eine hohe Festigkeit voraus.

Zum Härten ist nicht jeder Stahl gleich gut geeignet. Am besten werden daher die Mitnehmervorsprünge aus sogenannten Vergütungsstählen gefertigt. Beispiele für induktiv härtbare Vergütungsstähle sind die Stahlsorten CF 35 oder CF 53. Diese Stähle können jedoch nicht oder nur unter speziellen Bedingungen geschweißt werden, da sie an den Verbindungsstellen aushärten können und zur Kaltrißbildung beim Schweißen neigen.

Beim Befestigungssockel 3 dagegen wird auf eine einfache und sichere Verschweißbarkeit mit einem an der Befestigungsfläche 6 anzubringenden Gegenstand Wert gelegt. Da schweißgeeignete Stähle - in Frage kommen hier Baustähle - meist eine nur geringe Härtbarkeit und begrenzte Festigkeit aufweisen, sind sie nur bedingt für die Mitnehmervorsprünge 2 und/oder die Basis 10 geeignet. Umgekehrt ist ein für die Mitnehmervorsprünge 2 gut geeigneter Vergütungsstahl nicht einfach zu schweißen, vor allem nicht, wenn eine Schweißung am Einsatzort des Mitnehmers stattfinden soll. Ein Vergütungsstrahl kommt daher für den Befestigungssockel nicht in Frage, wenn der zu fördernde Gegenstand an den Mitnehmer geschweißt werden soll.

Dieselben Überlegungen gelten selbstverständlich auch, wenn wenigstens ein Teilkörper A, B aus einem Kunststoff und/oder einem Nichteisenmetall gefertigt ist. Der Einsatz von Kunststoffen hat sich zwar bei Mitnehmern, die unter rauen Umgebungsbedingungen und bei hohen Lasten eingesetzt werden, noch nicht durchgesetzt. Dennoch sind die hier geschilderten Ausführungsbeispiele auch für solche Mitnehmer grundsätzlich gut geeignet.

Im Folgenden ist anhand der beispielhaften Ausführungsformen der Fig. 2 bis 5 erläutert, wie eine innige formschlüssige Verbindung trotz der unterschiedlichen Materialien der wenigstens zwei Teilkörper A, B erreicht werden kann. Die Festigkeit dieser formschlüssigen Verbindung reicht dabei an die Festigkeit einer stoffschlüssigen Verbindung heran, ohne jedoch die Materialauswahl in gleichen Maßen wie bei einem Stoffschluss zu beeinträchtigen. Diese Vorteile werden durch die Herstellung des Mitnehmers 1 mittels eines Verbundgussverfahrens erreicht. Bei diesem Verbundgussverfahren wird zunächst ein Teilkörper A, B vorgefertigt und dann in eine Gussform eingelegt. Anschließend wird der andere Teilkörper B, A angegossen. Danach werden die Mitnehmervorsprünge 2 gehärtet oder vergütet.

Aufgrund der Wärmeleitfähigkeit des vorgefertigten, in die Gussform eingelegten Teilkörpers wird dieser beim Angießen des anderen Teilkörpers an seiner Oberfläche nicht oder nur sehr wenig angeschmolzen. Die Verbindung zwischen den beiden Teilkörpern A, B erfolgt folglich unabhängig von der Materialwahl nicht durch einen Stoff-, sondern durch einen Formschluss. Die Schmelze des angegossenen Teilkörpers backt an der Oberfläche des vorgefertigten Teilkörpers an, indem sie alle Oberflächenunebenheiten auffüllt. Allerdings kann durch eine entsprechende Temperaturführung während des Gießens des einen Teilkörpers an den anderen Teilkörper auch eine zumindest abschnittsweise stoffschlüssige Verbindung zwischen den Teilkörpern erreicht werden.

Wahlweise kann jeder der beiden Teilkörper A, B vorgefertigt sein, so dass entsprechend der andere Teilkörper B, A angegossen wird. Lediglich beispielhaft ist im Folgenden davon ausgegangen, dass der Körper B mit dem Befestigungssockel 3 vorgefertigt ist und der Teilkörper A mit der Basis 10 bzw. dem wenigstens einen Mitnehmervorsprung 2 an den Teilkörper B angegossen wird.

Die Verbindung zwischen den wenigstens zwei Teilkörpern A, B wird durch wenigstens eine Formschlussanordnung F verbessert. Die Formschlussanordnung F weist wenigstens zwei ineinander greifende Formschlusselemente 12, 13 auf, die jeweils von einem Teilkörper A, B gebildet sind. Der Formschluss erfolgt vorzugsweise wenigstens in Längsrichtung der Gliederkette, so dass mit Hilfe der Formschlussanordnung F die Antriebskraft von der Gliederkette auf den am Befestigungssockel 3 anzubringenden Gegenstand sicher weitergeleitet werden kann.

Anstelle oder zusätzlich zur Formschlussverbindung durch Gießen können auch beide Teilkörper mit komplementären Formschlusselementen vorgefertigt und dann verschweißt sein.

Wie Fig. 2 zeigt, ragt bei einer Formschlussanordnung F das von dem einen Teilkörper, hier dem Teilkörper A, gebildete Formschlusselement 12 in den anderen Teilkörper, hier der Teilkörper B.

Die Formschlusselemente 12 können, wie Fig. 2 zeigt, in einer Mittenebene M des Mitnehmers 1 liegen.

Ist einer der Teilkörper A, B vorgefertigt und wird der andere Teilkörper B, A im Zuge der Herstellung des Mitnehmers 1 an den vorgefertigten Teilkörper angegossen, so ergibt sich die Formschlussanordnung F dadurch, dass das vorgefertigte Formschlusselement 12 von der Schmelze des angegossenen Teilkörpers umflossen wird. So formt sich bei dem in der Fig. 1 dargestellten rippenförmigen Vorsprung 14 eine komplementäre Halteöffnung 15 automatisch während des Angießens: Die Schmelze des angegossenen Teilkörpers bildet mit dem Formschlusselement 13 die Negativform des vorgefertigen Formschlusselements 12.

Die gilt auch, wenn nicht ein vorsprungartiges Formschlusselement 12, sondern ein als Ausnehmung 15 ausgestaltetes Formschlusselement 13 vorgefertigt ist: In diesem Fall füllt die Schmelze des angegossenen Teilkörpers die Ausnehmung 15 und bildet dadurch den Haltevorsprung 14 als Negativform des Vorsprungs 15.

Damit die Verbindung zwischen den beiden Teilkörpern A, B nicht nur in Richtung der Antriebskraft große Kräfte übertragen kann, sondern auch der Zusammenhalt der beiden Teilkörper A, B verstärkt ist, kann ein Formschluss auch in einer senkrecht zur Antriebsrichtung bzw. Längsrichtung der Gliederkette weisenden Richtung vorgesehen sein. Beim Ausführungsbeispiel der Fig. 2 ist dies beispielsweise die Normalenrichtung N auf eine Verbindungsfläche 16 zwischen den Teilkörpern. Wie das Ausführungsbeispiel zeigt, kann diese Verbindungsfläche 16 parallel zur Grundfläche 11 der Basis bzw. einer Grundfläche 17 verlaufen. Durch eine solche Formschlussanordnung E wird verhindert, dass der angegossene Teilkörper von dem vorgefertigten Teilkörper beispielsweise durch die Gewichtskraft der am Befestigungssockel 3 befestigten Gegenstandes abgezogen wird.

Während sich die Formschlusselemente 12, 13 zur Übertragung der Antriebskraft in Längsrichtung L überlappen, findet bei den Formschlusselementen 18, 19 eine Überlappung in der entsprechend zu sichernden Richtung, hier der Normalen N auf die Grundfläche 17, statt. Eine Möglichkeit, eine solche Formschlussanordnung E herzustellen, besteht gemäß Fig. 2 darin, dass die Formschlusselemente 18, 19 von den Formschlusselementen 12, 13 gebildet sind. So weist beispielsweise der Haltevorsprung 14, der von dem einen Teilkörper gebildet ist, einen Durchbruch 20 auf, der vom Material des anderen Teilkörpers stegartig durchdrungen ist. Auch hier sind die Formschlusselemente 18, 19 komplementär zueinander ausgestaltet, was sich im Zuge des Angießens automatisch ergibt. Die Formschlussanordnung E kann alternativ oder kumulativ zur Formschlussanordnung F vorhanden sein.

Selbstverständlich können die Formschlusselemente 12 gegenüber der Fig. 1 in ihrer Lage auch vertauscht sein. So kann der Haltevorsprung 12 und/oder die Aufnahme 15 auch vom Teilkörper A gebildet sein. Letztlich würde lediglich die Befestigungsplatte 4 des Befestigungssockels 3 bei dieser Ausgestaltung jedoch dicker werden, da in ihr die Aufnahmen für die Haltevorsprünge untergebracht werden müssen.

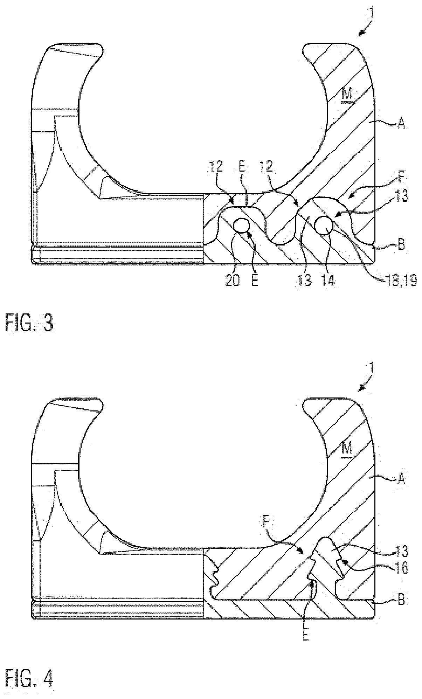

Die Ausführungsbeispiele der Fig. 3 und 4 zeigen, dass eine unterschiedliche Anzahl von Formschlussanordnungen E, F und unterschiedliche Formen von Formschlusselementen 12, 13, 18, 19 möglich sind. So kann nach Fig. 3 die Anzahl der Formschlusselemente gegenüber der Anzahl des Ausführungsbeispiels der Fig. 2 erhöht sein.

Nach dem Ausführungsbeispiel der Fig. 4 kann auch eine tannenbaumförmige Ausgestaltung der Haltevorsprünge 14 möglich sein. Die Haltevorsprünge 14 sind mit den Formschlusselementen 18, 19 versehen, die den Formschluss zwischen den Teilkörpern A und B nochmals erhöhen. Die Formschlusselemente 18, 19 können rotationssymmetrisch oder flach, in Form von Rippen, ausgebildet sein.

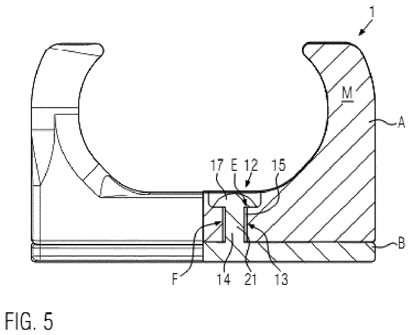

Eine Abwandlung des Mitnehmers 1, die hier nicht beansprucht wird, zeigt die Fig. 5, bei dem eine Formschlussanordnung E durch plastische Verformung eines Formschlusselements 12 hergestellt ist. Das Formschlusselement 12 kann beispielsweise, wie Fig. 5 zeigt, eine Art Niet bilden, das den anderen Teilkörper durchdringt. An seinem freien Ende ist das Formschlusselement 12 unter Bildung eines Kopfes verformt. Der Kopf und seine Auflage entsprechen den Formschlusselementen 18, 19 der obigen Ausgestaltungen, während der Schaft 21 dem Haltevorsprung 14 und der Durchbruch zur Aufnahme des Schaftes 21 der Aufnahme 15 entspricht. Das Formschlusselement 12 ist, wie bei den Ausführungsformen der Fig. 2 bis 4, vom Material des einen Teilkörpers gebildet.

Die Ausgestaltung nach Fig. 5 kann zusätzlich oder anstelle einer Zusammenfügung der Teilkörper A, B mittels eines Verbundgussverfahrens oder auch Schweißverfahrens eingesetzt werden. Auch bei Fig. 5 gilt, dass das Formschlusselement 12 nicht, wie gezeigt, Teil des Teilkörpers B sein muss, sondern auch vom Teilkörper A gebildet sein kann.

### Bezugszeichen

- 1: Mitnehmer
- 2: Mitnehmervorsprünge
- 3: Befestigungssockel
- 4: Befestigungsplatte
- 5: von Mitnehmervorsprüngen abgewandte Seite
- 6: Befestigungsfläche
- 7: in Längsrichtung L gelegene Enden des Mitnehmers
- 8: Aufnahmeraum für Gliederkette
- 9: Innenfläche der Mitnehmervorsprünge
- 10: Basis
- 11: Grundfläche der Basis
- 12: Formschlusselement des einen Teilkörpers
- 13: Formschlusselement des anderen Teilkörpers
- 14: Haltevorsprung
- 15: Aufnahmen
- 16: Verbindungsfläche zwischen den Teilkörpern
- 17: Grundfläche des Mitnehmers
- 18: Formschlusselement
- 19: Formschlusselement
- 20: Durchbruch
- 21: Schaft

- A: Teilkörper
- B: Teilkörper
- E: Formschlussanordnung
- F: Formschlussanordnung
- M: Mittenebene
- N: Normalenrichtung
- L: Längsrichtung

## Patentansprüche

1. Mitnehmer zur Anbringung eines Gegenstandes an einer Gliederkette, mit wenigstens einem, mit der Gliederkette in Eingriff bringbar ausgestalteten Mitnehmervorsprung (2), der von einem Befestigungssockel (3) zur Befestigung des Gegenstands am Mitnehmer (1) absteht, wobei der Befestigungssockel (3) und der wenigstens eine Mitnehmervorsprung (2) von jeweils wenigstens einem Teilkörper (A, B) gebildet sind, wobei der wenigstens eine Teilkörper (A) mit dem wenigstens anderen Teilkörper (B) über wenigstens eine Formschlussanordnung (E, F) verbunden ist,
**dadurch gekennzeichnet, dass** der den Befestigungssockel (3) bildende, wenigstens eine Teilkörper (B) aus einem anderen Werkstoff gebildet ist als der den wenigstens einen Mitnehmervorsprung (2) bildende, wenigstens eine andere Teilkörper (A), und dass der wenigstens eine Teilkörper (A, B) an den wenigstens einen anderen Teilkörper (B, A) angegossen ist, so dass die Teilkörper (A,B) nicht mehr zerstörungsfrei voneinander lösbar zusammengefügt sind.

2. Mitnehmer (1) nach Anspruch 1, **dadurch gekennzeichnet, dass** der Befestigungssockel (3) aus einem schweißgeeigneten Stahl gebildet ist.

3. Mitnehmer (1) nach einem der Ansprüche 1 bis 2, **dadurch gekennzeichnet, dass** der wenigstens eine Mitnehmervorsprung (2) aus einem Vergütungsstahl gebildet ist.

4. Mitnehmer (1) nach einem der Ansprüche 1 bis 2, **dadurch gekennzeichnet, dass** der wenigstens eine Mitnehmervorsprung (2) zumindest teilweise gehärtet ist.

5. Mitnehmer (1) nach einem der Ansprüche 1 bis 4, **dadurch gekennzeichnet, dass** Formschlusselemente (12) der wenigstens einen Formschlussanordnung (F, E) von den Teilkörpern (A, B) selbst gebildet sind.

6. Mitnehmer (1) nach einem der Ansprüche 1 bis 5, **dadurch gekennzeichnet, dass** das Formschlusselement (12) des einen Teilkörpers (A, B) ein weiteres Formschlusselement (18) bildet, das sich mit einem weiteren Formschlusselement (19) des vom anderen Teilkörper gebildeten Formschlusselements (13) im Eingriff befindet.

7. Mitnehmer (1) nach einem der Ansprüche 1 bis 6, **dadurch gekennzeichnet, dass** der wenigstens eine, den Mitnehmervorsprung (2) bildende Teilkörper (A) eine quaderförmige Basis (10) ausbildet, deren Grundfläche (11) dem Befestigungssockel (3) zugewandt ist.

8. Mitnehmer (1) nach einem der Ansprüche 1 bis 7, **dadurch gekennzeichnet, dass** der Befestigungssockel (3) an der dem wenigstens einen Mitnehmervorsprung (2) abgewandten Seite (5) eine Befestigungsplatte (4) bildet.

9. Mitnehmer (1) nach einem der Ansprüche 1 bis 8, **dadurch gekennzeichnet, dass** die Teilkörper (A, B) zumindest abschnittsweise stoffschlüssig miteinander verbunden sind.

10. Verfahren zur Herstellung eines Mitnehmers (1) zur Anbringung eines Gegenstandes an einer Gliederkette, wobei wenigstens ein Teilkörper (A) wenigstens ein mit der Gliederkette in Eingriff bringbaren Mitnehmervorsprung (2) und wenigstens ein anderer Teilkörper (B) einen Befestigungssockel (3) zur Befestigung des Gegenstandes am Mitnehmer (1) bildet, **wobei** die Teilkörper (A, B) unter Bildung einer Formschlussanordnung (F, E) zusammengefügt werden, **dadurch gekennzeichnet, dass** die beiden Teilkörper (A, B) aus unterschiedlichen Werkstoffen bestehen, und dass der eine Teilkörper (B, A) vor dem anderen Teilkörper (A, B) gefertigt und dann der andere Teilkörper (A, B) an den vorgefertigten Teilkörper (B, A) angegossen wird, so dass die wenigstens zwei Teilkörper (A, B) nicht mehr zerstörungsfrei voneinander lösbar zusammengefügt werden.

## Claims

1. Catch for fastening an object to a link chain, comprising at least one catch projection (2) which is formed so as to be able to be brought into engagement with the link chain and protrudes from an attachment base (3) for attaching the object to the catch (1), the attachment base (3) and the at least one catch projection (2) being formed by the at least one partial body (A, B) in each case, the at least one partial body (A) being connected to the at least one other partial body (B) by means of at least one form-locking arrangement (E, F), **characterised in that** the at least one partial body (B) which forms the attachment base (3) is made of a different material from the at least one other partial body (A) which forms the at least one catch projection (2), and **in that** the at least one partial body (A, B) is cast onto the at least one other partial body (B, A) such that the partial bodies (A, B) are joined together in such a way that they can no longer be detached from one another in a non-destructive manner.

2. Catch (1) according to claim 1, **characterised in that** the attachment base (3) is made of weldable steel.

3. Catch (1) according to either claim 1 or claim 2, **characterised in that** the at least one catch projection (2) is made of tempering steel.

4. Catch (1) according to either claim 1 or claim 2, **characterised in that** the at least one catch projection (2) is hardened at least in part.

5. Catch (1) according to any of claims 1 to 4, **characterised in that** the form-locking elements (12) of the at least one form-locking arrangement (F, E) are formed by the partial bodies (A, B) themselves.

6. Catch (1) according to any of claims 1 to 5, **characterised in that** the form-locking element (12) of one partial body (A, B) forms another form-locking element (18) which engages with another form-locking element (19) of the form-locking element (13) formed by the other partial body.

7. Catch (1) according to any of claims 1 to 6, **characterised in that** the at least one partial body (A) which forms the catch projection (2) forms a rectangular base (10), the bottom surface (11) of which faces the attachment base (3).

8. Catch (1) according to any of claims 1 to 7, **characterised in that** the attachment base (3) forms an attachment plate (4) on the side (5) facing away from the at least one catch projection (2).

9. Catch (1) according to any of claims 1 to 8, **characterised in that** the partial bodies (A, B) are integrally joined to one another at least in portions.

10. Method for producing a catch (1) for fastening an object to a link chain, at least one partial body (A) forming at least one catch projection (2) which can be brought into engagement with the link chain, and at least one other partial body (B) forming an attachment base (3) for attaching the object to the catch (1), the partial bodies (A, B) being joined together to form a form-locking arrangement (F, E), **characterised in that** the two partial bodies (A, B) consist of different materials, and **in that** one partial body (B, A) is manufactured before the other partial body (A, B) and then the other partial body (A, B) is cast onto the prefabricated partial body (B, A), such that the at least two partial bodies (A, B) can no longer be detached from one another in a non-destructive manner.

## Revendications

1. Entraîneur destiné à rapporter un objet sur une chaîne à maillons, comprenant au moins une protubérance d'entraînement (2) d'une configuration permettant de venir en prise avec la chaîne à maillons, et qui fait saillie d'une semelle de fixation (3) destinée à la fixation de l'objet sur l'entraîneur (1), la semelle de fixation (3) et ladite au moins une protubérance d'entraînement (2) étant formées chacune respectivement par au moins un corps partiel (A, B), et ledit au moins un corps partiel (A) étant relié au dit au moins un autre corps partiel (B) par l'intermédiaire d'au moins un agencement de liaison par complémentarité de formes (E, F),
**caractérisé**
**en ce que** ledit au moins un corps partiel (B) formant la semelle de fixation (3), est réalisé en un autre matériau que ledit au moins un autre corps partiel (A) formant ladite au moins une protubérance d'entraînement (2), et **en ce que** ledit au moins un corps partiel (A, B) est moulé contre ledit au moins un autre corps partiel (B, A), de sorte que les corps partiels (A, B) sont assemblés de manière à ne plus pouvoir être séparés l'un de l'autre de façon non destructive.

2. Entraîneur (1) selon la revendication 1, **caractérisé en ce que** la semelle de fixation (3) est réalisé en un acier adapté au soudage.

3. Entraîneur (1) selon l'une des revendications 1 à 2, **caractérisé en ce que** ladite au moins une protubérance d'entraînement (2) est réalisée en un acier de traitement thermique.

4. Entraîneur (1) selon l'une des revendications 1 à 2, **caractérisé en ce que** ladite au moins une protubérance d'entraînement (2) a subi au moins en partie, un traitement de trempe.

5. Entraîneur (1) selon l'une des revendications 1 à 4, **caractérisé en ce que** des éléments de liaison par complémentarité de formes (12) du dit au moins un agencement de liaison par complémentarité de formes (F, E), sont formés par les corps partiels (A, B) eux-mêmes.

6. Entraîneur (1) selon l'une des revendications 1 à 5, **caractérisé en ce que** l'élément de liaison par complémentarité de formes (12) d'un corps partiel (A, B) forme un autre élément de liaison par complémentarité de formes (18), qui se trouve en prise avec un autre élément de liaison par complémentarité de formes (19) de l'élément de liaison par complémentarité de formes (13) formé par l'autre corps partiel.

7. Entraîneur (1) selon l'une des revendications 1 à 6, **caractérisé en ce que** ledit au moins un corps partiel (A) formant la protubérance d'entraînement (2), forme une embase (10) parallélépipédique dont la surface de base (11) est dirigée vers la semelle de fixation (3) .

8. Entraîneur (1) selon l'une des revendications 1 à 7, **caractérisé en ce que** la semelle de fixation (3) forme, sur le côté (5) opposé à celui dirigé vers ladite au moins une protubérance d'entraînement (2), une plaque de fixation (4).

9. Entraîneur (1) selon l'une des revendications 1 à 8, **caractérisé en ce que** les corps partiels (A, B) sont reliés, au moins par endroits, par une liaison de continuité de matière.

10. Procédé de fabrication d'un entraîneur (1) destiné à rapporter un objet sur une chaîne à maillons, au moins un corps partiel (A) formant au moins une protubérance d'entraînement (2) pouvant être amenée en prise avec la chaîne à maillons, et au moins un autre corps partiel (B) formant une semelle de fixation (3) pour la fixation de l'objet sur l'entraîneur (1), et les corps partiels (A, B) étant assemblés en formant un agencement de liaison par complémentarité de formes (F, E), **caractérisé en ce que** les deux corps partiels (A, B) sont réalisés en des matériaux différents, et **en ce que** l'un des corps partiels (B, A) est fabriqué avant l'autre corps partiel (A, B), et ledit autre corps partiel (A, B) est ensuite moulé contre le corps partiel (B, A) préfabriqué, de sorte que lesdits au moins deux corps partiels (A, B) sont assemblés de manière à ne plus pouvoir être séparés l'un de l'autre de façon non destructive.
